# EUROPÄISCHE PATENTSCHRIFT

(11) **EP 3 760 908 B1**
(45) Veröffentlichungstag und Bekanntmachung des Hinweises auf die Patenterteilung: **24.04.2024**
(21) Anmeldenummer: 20178262.0
(22) Anmeldetag: 04.06.2020
(51) Int. Cl.: F16L 47/02, F16L 47/28

(54) **ROHRLEITUNG UND ABZWEIGELEMENT**
CONDUIT AND BRANCHING ELEMENT
CONDUIT ET ÉLÉMENT DE BRANCHEMENT

(30) Priorität: 05.07.2019 DE 102019209914
(43) Veröffentlichungstag der Anmeldung: 06.01.2021
(73) Patentinhaber: ContiTech Techno-Chemie GmbH, 61184 Karben (DE)
(72) Erfinder: Messerschmidt, Jonathan, 30419 Hannover (DE)
(74) Vertreter: Continental Corporation

(56) Entgegenhaltungen:
- EP-A1- 0 076 460
- EP-A1- 1 396 326
- DE-A1- 19 639 365

## Beschreibung

Die vorliegende Erfindung betrifft ein Abzweigelement zur Verwendung bei einer Rohrleitung gemäß dem Patentanspruch 1 sowie eine Rohrleitung mit einem derartigen Abzweigelement gemäß dem Patentanspruch 6.

Auf verschiedenen technischen Gebieten werden Rohrleitungen zur Förderung bzw. zur Führung von Medien wie insbesondere von Fluiden wie z.B. Flüssigkeiten und Gasen aber auch von riesel- oder pumpfähigen Feststoffen verwendet, welche auch als Rohre bezeichnet werden können. Derartige Rohrleitungen können z.B. aus Gründen der Gewichtsreduzierung und bzw. oder der Kostenreduzierung aus Kunststoff z.B. mittels eines Spritzgußverfahrens hergestellt werden.

Bei verschiedenen Anwendungen derartiger Rohrleitungen aus Kunststoff ist es erforderlich, ein Abzweigelement seitlich bzw. radial an der eigentlichen Rohrleitung anzuordnen, welche auch als Hauptleitung bezeichnet werden kann. Hierzu weist die Wandung der Hauptleitung eine Aussparung auf, welche eine Abzweigöffnung bildet, durch welche das Medium radial aus der Hauptleitung austreten kann. Auch kann von außen an dieser Stelle z.B. ein Sensorelement in eine in der Längsrichtung verlaufende Durchströmöffnung der Hauptleitung hineinragen, um wenigstens eine Eigenschaft des Mediums sensorisch zu erfassen.

In jedem Fall ist es üblich, von außen an dieser Stelle ein Abzweigelement auf die Hauptleitung aufzusetzen, um eine medienfördernde Verbindung herzustellen bzw. das Sensorelement zu halten. Derartige Abzweigelemente sind üblicherweise ebenfalls aus Kunststoff und insbesondere aus demselben oder zumindest aus einem Kunststoff mit vergleichbaren Materialeigenschaften hergestellt.

Üblicherweise weist ein derartiges Abzweigelement mittig eine Durchgangsöffnung auf, welche die Abzweigöffnung der Hauptleitung nach außen hin fortführen kann.

Der Abzweigelementkörper bildet dabei in der Umfangsrichtung der Hauptleitung üblicherweise beidseitig einen Kragen aus, mit dem der Abzweigelementkörper die Wandung der Hauptleitung in der Umfangsrichtung abschnittsweise umgreift. Der Kragen erstreckt sich dabei üblicherweise um maximal ca. 180° in der Umfangsrichtung, so dass der Abzweigelementkörper mit seinem Kragen auf die Wandung der Hauptleitung radial aufgesetzt werden kann.

In dieser Anordnung wird üblicherweise der Kragen des Abzweigelementkörpers ausreichend stark erwärmt, so dass dessen Material mit dem Material der Wandung der Hauptleitung verschmilzt und nach dem Abkühlen und Erhärten eine stoffschlüssige Verbindung zwischen dem Abzweigelement und der Hauptleitung bildet, welche auch fluiddicht ist. Dies kann beispielsweise mittels Laserschweißen, mittels Rotationsreibschweißen und dergleichen erfolgen.

Nachteilig hierbei ist, dass bei der Erwärmung des Materials des Abzweigelements die Gefahr besteht, dass dieses als Schmelze durch die Abzweigöffnung der Wandung der Hauptleitung in dessen Durchströmöffnung, durch welche hindurch das Medium strömen soll, gelangt und dort abkühlt und erhärtet. Hierdurch kann der Querschnitt der Durchströmöffnung der Hauptleitung reduziert und der Durchfluss entsprechend gemindert werden. Ebenso kann die Öffnung des Abzweigelements hierdurch im Querschnitt verengt werden, so dass auch hier der Durchfluss reduziert werden kann. Auch kann dies eine derartige Verformung des Querschnitts der Öffnung des Abzweigelements bewirken, dass z.B. ein Sensorelement dort nicht mehr aufgenommen werden kann.

Nachteilig ist ferner, dass sich auf diese Art und Weise Partikel der Schmelze lösen und in die Durchströmöffnung der Hauptleitung gelangen können. Dort können diese abgelösten Partikel eine Verunreinigung des Mediums bewirken und z.B. durch Verstopfen eines Expansionsventils zu Beschädigungen bis hin zum Ausfall eines Systems bzw. eines Kreislaufs führen, bei dem die Rohrleitung zum Medientransport eingesetzt wird.

Die DE 196 39 365 A1 betrifft einen Aufschweißsattel aus Kunststoff zur Herstellung eines Abzweiganschlusses an einem Kunststoffrohr, mit einem an dem Sattelkörper angeformten Anschlußstutzen zur Befestigung eines Abzweigrohres, einer Armatur oder dgl. sowie einer zylindrischen Auflagefläche zum Festschweißen des Sattelkörpers am Außenmantel eines Hauptrohres, wobei ein an der Auflagefläche des Sattelkörpers angeformter, koaxial zum Anschlußstutzen angeordneter Einschweißstutzen zur Befestigung des Aufschweißsattels in einer entsprechenden Bohrung in der Wand des Hauptrohres vorgesehen ist.

Eine Aufgabe der vorliegenden Erfindung ist es, eine Rohrleitung bzw. ein Abzweigelement der eingangs beschriebenen Art bereit zu stellen, so dass ein Eintritt von Schmelze eines erwärmten Materials eines Abzweigelements in eine Abzweigöffnung einer Hauptleitung hinein wenigstens erschwert, vorzugsweise verhindert, werden kann. Zumindest soll eine Alternative zu bekannten derartigen Rohrleitungen bzw. Abzweigelementen bereitgestellt werden.

Die Aufgabe wird erfindungsgemäß durch ein Abzweigelement mit den Merkmalen gemäß Patentanspruch 1 sowie durch eine Rohrleitung mit den Merkmalen gemäß Patentanspruch 6 gelöst. Vorteilhafte Weiterbildungen sind in den Unteransprüchen beschrieben.

Somit betrifft die vorliegende Erfindung ein Abzweigelement zur Verwendung bei einer Rohrleitung mit einer Hauptleitung, welche eine Wandung aufweist, wobei die Wandung eine Durchströmöffnung zur Führung eines Mediums im Wesentlichen umschließt, und wobei die Wandung wenigstens eine Abzweigöffnung aufweist, welche sich zumindest im Wesentlichen senkrecht zur Durchströmöffnung erstreckt, wobei das Abzweigelementeinen Abzweigelementkörper aufweist, welcher ausgebildet ist, im Wesentlichen senkrecht auf der Wandung der Hauptleitung angeordnet zu werden, wobei der Abzweigelementkörper wenigstens eine Öffnung aufweist, welche zumindest abschnittsweise deckungsgleich mit der Durchströmöffnung der Hauptleitung ausgebildet ist, und wobei der Abzweigelementkörper wenigstens einen Kragen aufweist, welcher ausgebildet ist, die Wandung der Hauptleitung zumindest abschnittsweise zu umgeben und durch Erwärmen stoffschlüssig mit der Wandung der Hauptleitung verbunden zu werden, wobei ein Innenrand der Öffnung des Abzweigelementkörpers des Abzweigelements ausgebildet ist, einen Eintritt einer Schmelze des erwärmten Materials des Abzweigelementkörpers in die Abzweigöffnung der Wandung der Hauptleitung hinein wenigstens zu erschweren, vorzugsweise zu verhindern. Die Rohrleitung kann auch als Rohr bezeichnet werden und vorzugsweise Kunststoff aufweisen bzw. aus Kunststoff bestehen. Insbesondere kann die Rohrleitung mittels eines Spritzgussverfahrens aus Kunststoff hergestellt worden sein. Das zu führende Medium kann insbesondere ein Fluid sein.

Die o.g. Merkmale beschreiben einen Zwischenschritt in der Montage der Rohrleitung, bei dem das Abzweigelement auf bzw. in die Hauptleitung aufgesetzt bzw. eingesetzt ist, jedoch das Erwärmen des Kragens noch nicht stattgefunden hat. Hierdurch können die erfindungsgemäßen Merkmale, welche beim anschließenden Verfahrensschritt des Erwärmens des Kragens des Abzweigelements einen Eintritt einer Schmelze des erwärmten Materials des Abzweigelementkörpers in die Abzweigöffnung der Wandung der Hauptleitung hinein wenigstens erschweren und vorzugsweise verhindern können, beschrieben bzw. beansprucht werden.

Der vorliegenden Erfindung liegt dabei die Erkenntnis zugrunde, dass ein Eintritt einer Schmelze des erwärmten Materials des Abzweigelementkörpers in die Abzweigöffnung der Wandung der Hauptleitung hinein dadurch erschwert oder sogar verhindert werden kann, indem der Kragen des Abzweigelementkörpers entsprechend gestaltet wird. Insbesondere kann der Kragen des Abzweigelementkörpers ausgebildet sein, die Schmelze teilweise bis vollständig von dem Eintritt in die Abzweigöffnung der Wandung der Hauptleitung abzuhalten, indem diese Fließrichtung von dem Kragen des Abzweigelementkörpers blockiert bzw. eingenommen wird, wie weiter unten noch näher beschrieben werden wird. Alternativ oder zusätzlich kann der Kragen des Abzweigelementkörpers ausgebildet sein, die Schmelze teilweise bis vollständig von dem Eintritt in die Abzweigöffnung der Wandung der Hauptleitung abzuhalten, indem die Schmelze in eine andere Fließrichtung umgelenkt wird, wie ebenfalls weiter unten noch näher beschrieben werden wird. Hierdurch kann auch eine gewisse thermische Isolation bewirkt werden, welche der Entstehung von Schmelze überhaupt entgegenwirken kann, wie weiter unten noch näher beschrieben werden wird.

Erfindungsgemäß weist der Innenrand der Öffnung des Abzweigelementkörpers des Abzweigelements zumindest abschnittsweise, vorzugsweise vollständig, wenigstens ein Eingriffselement auf, welches sich zumindest abschnittsweise in die Abzweigöffnung der Wandung der Hauptleitung hinein erstrecken kann. Auf diese Weise kann, wie zuvor bereits erwähnt, die Schmelze teilweise bis vollständig von dem Eintritt in die Abzweigöffnung der Wandung der Hauptleitung abzuhalten, indem diese Fließrichtung von dem Kragen des Abzweigelementkörpers blockiert bzw. eingenommen wird. Gleichzeitig kann durch einen ausreichenden Abstand zwischen dem Eingriffselement und dem zu erwärmenden Bereich des Kragens des Abzweigelementkörpers verhindert werden, dass das Eingriffselement so stark erwärmt wird, dass seitens des Eingriffselements eine Verformung bzw. ein Schmelzeaustritt entstehenden kann.

Gemäß einem Aspekt der Erfindung bildet das Eingriffselement des Abzweigelementkörpers des Abzweigelements zumindest abschnittsweise einen Formschluss mit der Abzweigöffnung der Wandung der Hauptleitung. Mit anderen Worten ist das Eingriffselement ausgebildet, das Abzweigelement formschlüssig auf der Hauptleitung zu halten, wenn das Abzweigelement bestimmungsgemäß auf die Hauptleitung aufgesetzt wurde. Dies kann die Herstellung der Rohrleitung vereinfachen und bzw. oder beschleunigen, da eine Vorpositionierung des Abzweigelements auf der Hauptleitung erfolgen kann. Diese Anordnung kann sicherer als ohne die Verwendung des Eingriffselements beibehalten werden, bis das Erwärmen wie zuvor beschrieben erfolgt.

Gemäß einem Aspekt der Erfindung ist das Eingriffselement des Abzweigelementkörpers des Abzweigelements geschlossen umlaufend zum Innenrand der Öffnung des Abzweigelementkörpers des Abzweigelements ausgebildet. Hierzu kann das Eingriffselement ringförmig geschlossen ausgebildet sein. Diese Form des Eingriffselements kann auch als zylindrisch oder konusförmig bezeichnet werden. Auf diese Art und Weise können die zuvor beschriebenen Eigenschaften und Vorteile des Eingriffselements in dessen Umfangsrichtung durchgängig genutzt werden.

Erfindungsgemäß weist der Innenrand der Öffnung des Abzweigelementkörpers des Abzweigelements zumindest abschnittsweise, vorzugsweise vollständig, wenigstens eine Aussparung auf, welche ausgebildet ist, die Schmelze zumindest teilweise aufzunehmen. Hierdurch kann seitens des Abzweigelementkörpers wenigstens ein Reservoir geschaffen werden, in welches die Schmelze anstelle der Abzweigöffnung der Wandung der Hauptleitung zumindest teilweise und vorzugsweise vollständig fließen kann. Auf diese Art und Weise kann die Schmelze von der Abzweigöffnung der Wandung der Hauptleitung ferngehalten bzw. von dieser abgelenkt werden. Auch kann die Aussparung, welche üblicherweise mit Umgebungsluft gefüllt ist, eine thermische Isolierung bewirken, so dass der Entstehung von Schmelze überhaupt entgegengewirkt werden kann.

Gemäß einem Aspekt der Erfindung ist die Aussparung des Abzweigelementkörpers des Abzweigelements geschlossen umlaufend zum Innenrand der Öffnung des Abzweigelementkörpers des Abzweigelements ausgebildet. Hierzu kann die Aussparung ringförmig geschlossen ausgebildet sein. Diese Form der Aussparung kann auch als zylindrisch oder konusförmig bezeichnet werden. Auf diese Art und Weise können die zuvor beschriebenen Eigenschaften und Vorteile des Eingriffselements in dessen Umfangsrichtung durchgängig genutzt werden.

Die vorliegende Erfindung betrifft auch eine Rohrleitung mit einer Hauptleitung, welche eine Wandung aufweist, wobei die Wandung eine Durchströmöffnung zur Führung eines Mediums im Wesentlichen umschließt, und wobei die Wandung wenigstens eine Abzweigöffnung aufweist, welche sich zumindest im Wesentlichen senkrecht zur Durchströmöffnung erstreckt, und
mit einem Abzweigelement wie zuvor beschrieben. Mit anderen Worten beschreibt bzw. beansprucht dieser Aspekt der Erfindung die zuvor beschriebene Rohrleitung nach dem Verfahrensschritt der Erwärmung des Erwärmens des Kragens des Abzweigelements, bei dem der Kragen des Abzweigelements mit der Wandung der Hauptleitung zumindest abschnittsweise stoffschlüssig verbunden ist.

Mehrere Ausführungsbeispiele und weitere Vorteile der Erfindung werden nachstehend im Zusammenhang mit den folgenden Figuren erläutert. Darin zeigt:
- Fig. 1: einen schematische Querschnitt einer Rohrleitung gemäß dem Stand der Technik;
- Fig. 2: einen schematische Querschnitt einer nicht erfindungsgemäßen Rohrleitung gemäß einem ersten Ausführungsbeispiel;
- Fig. 3: einen schematische Querschnitt einer nicht erfindungsgemäßen Rohrleitung gemäß einem zweiten Ausführungsbeispiel; und
- Fig. 4: einen schematische Querschnitt einer erfindungsgemäßen Rohrleitung gemäß einem dritten Ausführungsbeispiel.

Das erste und das zweite Ausführungsbeispiel werden durch die Ansprüche nicht abgedeckt.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U.

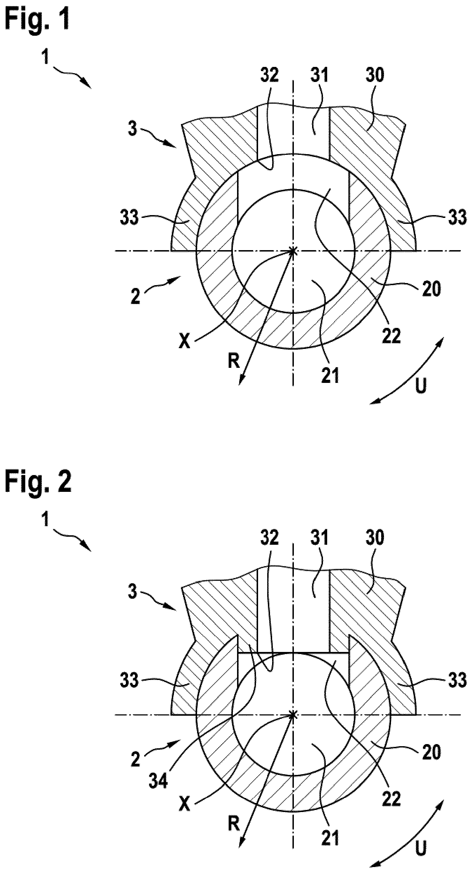

Fig. 1 zeigt eine schematische Schnittdarstellung einer Rohrleitung 1 gemäß dem Stand der Technik. Die Rohrleitung 1 weist eine Hauptleitung 2 auf, welche auch als Grundrohr 2 der Rohrleitung 1 bezeichnet werden kann. Die Hauptleitung 2 erstreckt sich länglich entlang der Längsachse X. Die Hauptleitung 2 weist eine Wandung 20 auf, welche aus Kunststoff besteht und mittels eines Spritzgussverfahrens hergestellt ist. Entlang der Längsachse X erstreckt sich eine Durchströmöffnung 21 der Hauptleitung 2, welche in der Umfangsrichtung U von der Wandlung 20 im Wesentlichen umschlossen und entlang der Längsachse X an beiden Enden der Rohrleitung 1 offen ausgebildet ist. Durch das eine Ende der Rohrleitung 1 kann ein Medium wie z.B. ein Fluid in die Durchströmöffnung 21 der Hauptleitung 2 eintreten, durch diese hindurchströmen und an dem gegenüberliegenden Ende der Rohrleitung 1 wieder aus dieser austreten. Hierdurch kann das Fluid von der Rohrleitung 1 geführt werden.

An einer Stelle ihres Verlaufs entlang der Längsachse X weist die Wandung 20 des Grundrohr 2 dort eine Abzweigöffnung 22 auf, wo der schematische Querschnitt gemäß der Figur 1 dargestellt ist. Die Abzweigöffnung 22 erstreckt sich radial von der Längsachse X und in der Darstellung der Figur 1 nach oben weg. Die Abzweigöffnung 22 der Hauptleitung 2 ist zylindrisch ausgebildet und verbindet die Durchströmöffnung 20 der Hauptleitung 2 mit dessen Umgebung.

Die Rohrleitung 1 weist ferner ein Abzweigelement 3 auf, welches aus einem Abzweigelementkörper 30 besteht. Der Abzweigelementkörper 30 besteht aus demselben Kunststoffmaterial wie die Hauptleitung 2. Der Abzweigelementkörper 30 weist eine Öffnung 31 auf, welche bei der bestimmungsgemäßen Verwendung des Abzweigelements 3 deckungsgleich mit der Abzweigöffnung 22 der Hauptleitung 2 ist. Auch die Öffnung 31 des Abzweigelements 3 ist zylindrisch jedoch etwas geringe im Querschnitt als die Abzweigöffnung 22 der Hauptleitung 2 ausgebildet.

Auf diese Art und Weise kann das Abzweigelement 3 in der Darstellung der Figur 1 von oben auf die entsprechende Stelle der Hauptleitung 2 aufgesetzt werden, so dass die Abzweigöffnung 22 der Hauptleitung 2 und die Öffnung 31 des Abzweigelements 3 sich überlappen und zumindest abschnittsweise eine gemeinsame Durchgangsöffnung bilden können, durch welche hindurch ein Medium von außen durch das Abzweigelement 3 hindurch in die Durchströmöffnung 21 der Hauptleitung 2 eintreten bzw. aus der Durchströmöffnung 21 der Hauptleitung 2 durch das Abzweigelement 3 hindurch nach außerhalb der Rohrleitung 1 austreten kann. Auch kann z.B. ein Sensorelement von außen durch das Abzweigelement 3 hindurch in die Durchströmöffnung 21 der Hauptleitung 2 hineingeführt werden.

Um das Abzweigelement 3 in dieser bestimmungsgemäßen Anordnung gegenüber der Hauptleitung 2 zu halten, weist der Abzweigelementkörper 30 in der Umfangsrichtung U der Hauptleitung 2 beidseitig seiner Öffnung 31 jeweils einen abschnittsweise ausgebildeten bogenförmigen Kragen 33 auf, welcher auch als Sattel 33 bezeichnet werden kann. Die beiden Kragen 33 werden im Rahmen der Herstellung der Rohrleitung 1 z.B. mittels Laserschweißen angeschmolzen, so dass sich das Material des Abzweigelements 3 im Bereich der beiden Kragen 33 jeweils stoffschlüssig mit dem radial darunterliegenden Material der Wandung 20 der Hauptleitung 2 verbindet und nach dem Erkalten und Aushärten das Abzweigelement 3 mit der Hauptleitung 2 zur Rohrleitung 1 stoffschlüssig verbindet.

Hierbei besteht bei der bekannten Rohrleitung 1 gemäß der Figur 1 die Gefahr, dass durch die Erwärmung der beiden Kragen 33 das Abzweigelementkörpers 30 auch ein Innenrand 32 der Öffnung 31 des Abzweigelements 3 zum Schmelzen gebracht wird, da sich die Erwärmung durch das Material des Abzweigelements 3 hindurch ausreichend weit ausbreiten kann, um dies zu bewirken. Hierdurch kann ein Teil des Materials des Abzweigelementkörpers 30 ausreichend erwärmt werden, um sich ungewollt zu verformen und so die Öffnung 31 des Abzweigelements 3 in der Kontur zu verändern. Dies kann einen Durchfluss durch die Öffnung 31 des Abzweigelements 3 verändern bzw. reduzieren. Auch kann die Kontur der Öffnung 31 des Abzweigelements 3 derart verformt werden, dass ein Sensorelement nicht mehr wie gewünscht hindurchgeführt werden kann. Auch kann sich ein Teil des Materials des Abzweigelementkörpers 30 im Bereich des Innenrands 32 der Öffnung 31 des Abzweigelements 3 lösen und in die Durchströmöffnung 21 der Hauptleitung 2 fließen bzw. tropfen. Dies kann den Querschnitt der Durchströmöffnung 21 der Hauptleitung 2 verändern bzw. verengen. Auch können sich hierdurch lose Partikel bilden, welche von dem Fluid mitgeführt und zum Verstopfen von Aggregaten und dergleichen führen könne.

Fig. 2 zeigt einen schematische Querschnitt einer nicht erfindungsgemäßen Rohrleitung 1 gemäß einem ersten Ausführungsbeispiel. In diesem Fall ragt der Innenrand 32 der Öffnung 31 des Abzweigelements 3 in die Abzweigöffnung 22 der Hauptleitung 2 in der Darstellung der Figur 2 von oben hinein, so dass der Abzweigelementkörper 30 hier ein zylindrisches Eingriffselement 34 des Abzweigelements 3 bildet. Das Eingriffselement 34 entspricht der Form der Abzweigöffnung 22 der Hauptleitung 2, so dass mittels des Eingriffselements 34 ein formschlüssiger Halt des Abzweigelements 3 in der Abzweigöffnung 22 der Hauptleitung 2 ermöglicht wird. Gleichzeitig kann das Eingriffselement 34 des Abzweigelements 3 ein Eindringen von Schmelzen von dem Innenrand 32 der Öffnung 31 des Abzweigelements 3 in die Abzweigöffnung 22 der Hauptleitung 2 verhindern, da das Eingriffselement 34 des Abzweigelements 3 ausreichend weit von den beiden Kragen 33 des Abzweigelementkörpers 30 entfernt ist, um durch das Schweißen dort nicht so stark erwärmt zu werden, dass seitens des Eingriffselements 34 des Abzweigelements 3 Schmelze entstehen könnte. Dies kann die damit verbundenen Nachteile vermeiden.

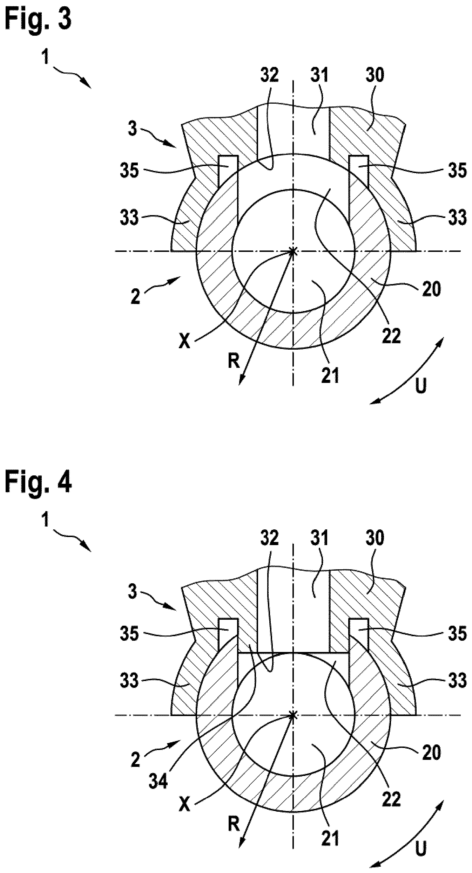

Fig. 3 zeigt einen schematische Querschnitt einer nicht erfindungsgemäßen Rohrleitung 1 gemäß einem zweiten Ausführungsbeispiel. In diesem Fall wird anstelle des Eingriffselements 34 des Abzweigelements 3 eine ringförmige Aussparung 35 zwischen den Kragen 33 des Abzweigelementkörpers 30 und dem Innenrand 32 der Öffnung 31 des Abzweigelements 3 ausgebildet, welche Schmelze aufnehmen kann, welche beim Erwärmen des Innenrands 32 der Öffnung 31 des Abzweigelements 3 dort entstehen kann. Auch kann eine gewisse thermische Isolierung des Innenrands 32 der Öffnung 31 des Abzweigelements 3 gegenüber den Kragen 33 des Abzweigelementkörpers 30 durch die Luft innerhalb der Aussparung 35 erreicht werden, welche die Erwärmung des Innenrands 32 der Öffnung 31 des Abzweigelements 3 und damit die Wahrscheinlichkeit der Entstehung von Schmelze reduzieren kann.

Fig. 4 zeigt einen schematische Querschnitt einer erfindungsgemäßen Rohrleitung 1 gemäß einem dritten Ausführungsbeispiel. In diesem Fall werden das zylindrische Eingriffselement 34 des Abzweigelements 3 mit der ringförmigen Aussparung 35 des Abzweigelements 3 kombiniert angewendet, um die jeweiligen Eigenschaften und Vorteile miteinander kombiniert zu verwenden. Dies kann entsprechend wirkungsvoll dafür sorgen, dass die Entstehung von Schmelze am Innenrand 32 der Öffnung 31 des Abzweigelements 3 verhindert sowie ggfs. aus der Abzweigöffnung 22 der Hauptleitung 2 ferngehalten wird. Auch kann der formschlüssige Halt des Innenrands 32 der Öffnung 31 des Abzweigelements 3 in der Abzweigöffnung 22 der Hauptleitung 2 wie zuvor beschrieben genutzt werden.

### Bezugszeichenliste (Teil der Beschreibung)

- R: radiale Richtung
- U: Umfangsrichtung
- X: Längsachse

- 1: Rohrleitung

- 2: Hauptleitung bzw. Grundrohr
- 20: Wandung der Hauptleitung 2
- 21: Durchströmöffnung der Hauptleitung 2
- 22: Abzweigöffnung der Hauptleitung 2

- 3: Abzweigelement
- 30: Abzweigelementkörper
- 31: Öffnung des Abzweigelements 3
- 32: Innenrand der Öffnung 31 des Abzweigelements 3
- 33: Kragen bzw. Sattel des Abzweigelements 3
- 34: Eingriffselement des Abzweigelements 3
- 35: Aussparung des Abzweigelements 3

## Patentansprüche

1. Abzweigelement (3) zur Verwendung bei einer Rohrleitung (1) mit einer Hauptleitung (2), welche eine Wandung (20) aufweist,
wobei die Wandung (20) eine Durchströmöffnung (21) zur Führung eines Mediums im Wesentlichen umschließt, und
wobei die Wandung (20) wenigstens eine Abzweigöffnung (22) aufweist, welche sich zumindest im Wesentlichen senkrecht zur Durchströmöffnung (21) erstreckt,
wobei das Abzweigelement (3) einen Abzweigelementkörper (30) aufweist, welcher ausgebildet ist, im Wesentlichen senkrecht auf der Wandung (20) der Hauptleitung (2) angeordnet zu werden,
wobei der Abzweigelementkörper (30) wenigstens eine Öffnung (31) aufweist, welche zumindest abschnittsweise deckungsgleich mit der Durchströmöffnung (21) der Hauptleitung (2) ausgebildet ist, und wobei der Abzweigelementkörper (30) wenigstens einen Kragen (33) aufweist, welcher ausgebildet ist, die Wandung (20) der Hauptleitung (2) zumindest abschnittsweise zu umgeben und durch Erwärmen stoffschlüssig mit der Wandung (20) der Hauptleitung (2) verbunden zu werden,
wobei ein Innenrand der Öffnung (31) des Abzweigelementkörpers (30) des Abzweigelements (3) ausgebildet ist, einen Eintritt einer Schmelze des erwärmten Materials des Abzweigelementkörpers (30) in die Abzweigöffnung (22) der Wandung (20) der Hauptleitung (2) hinein wenigstens zu erschweren, vorzugsweise zu verhindern, und
wobei der Innenrand (32) der Öffnung (31) des Abzweigelementkörpers (30) des Abzweigelements (3) zumindest abschnittsweise, vorzugsweise vollständig, wenigstens ein Eingriffselement (34) aufweist, welches sich zumindest abschnittsweise in die Abzweigöffnung (22) der Wandung (20) der Hauptleitung (2) hinein erstrecken kann,
**dadurch gekennzeichnet, dass**
der Innenrand (32) der Öffnung (31) des Abzweigelementkörpers (30) des Abzweigelements (3) zumindest abschnittsweise, vorzugsweise vollständig, wenigstens eine Aussparung (35) aufweist, welche ausgebildet ist, die Schmelze zumindest teilweise aufzunehmen.

2. Abzweigelement (3) nach Anspruch 1, **dadurch gekennzeichnet, dass** das Eingriffselement (34) des Abzweigelementkörpers (30) ausgebildet ist, zumindest abschnittsweise einen Formschluss mit der Abzweigöffnung (22) der Wandung (20) der Hauptleitung (2) zu bilden.

3. Abzweigelement (3) nach Anspruch 1 oder 2, **dadurch gekennzeichnet, dass**
das Eingriffselement (34) des Abzweigelementkörpers (30) geschlossen umlaufend zum Innenrand (32) der Öffnung (31) des Abzweigelementkörpers (30) ausgebildet ist.

4. Abzweigelement (3) nach einem der vorangehenden Ansprüche, **dadurch gekennzeichnet, dass**
die Aussparung (35) des Abzweigelementkörpers (30) geschlossen umlaufend zum Innenrand (32) der Öffnung (31) des Abzweigelementkörpers (30) des Abzweigelements (3) ausgebildet ist.

5. Abzweigelement (3) nach einem der vorangehenden Ansprüche, **dadurch gekennzeichnet, dass**
der Kragen (33) des Abzweigelementkörpers (30) ausgebildet ist, zumindest abschnittsweise mit der Wandung (20) der Hauptleitung (2) durch Erwärmen stoffschlüssig verbunden zu werden.

6. Rohrleitung (1)
mit einer Hauptleitung (2), welche eine Wandung (20) aufweist,
wobei die Wandung (20) eine Durchströmöffnung (21) zur Führung eines Mediums im Wesentlichen umschließt, und
wobei die Wandung (20) wenigstens eine Abzweigöffnung (22) aufweist, welche sich zumindest im Wesentlichen senkrecht zur Durchströmöffnung (21) erstreckt, und
mit einem Abzweigelement (3) gemäß einem der vorangehenden Ansprüche.

## Claims

1. Branching element (3) for use in a pipeline (1) having a main line (2) which has a wall (20),
wherein the wall (20) essentially surrounds a through-flow opening (21) for channelling a medium, and
wherein the wall (20) has at least one branching opening (22), which extends at least essentially perpendicularly in relation to the through-flow opening (21),
wherein the branching element (3) has a branching-element body (30), which is designed to be arranged essentially vertically on the wall (20) of the main line (2), wherein the branching-element body (30) has at least one opening (31), which is designed so as to at least partially coincide with the through-flow opening (21) of the main line (2), and wherein the branching-element body (30) has at least one collar (33), which is designed so as to at least partially enclose the wall (20) of the main line (2) and to be integrally connected to the wall (20) of the main line (2) by heating,
wherein an inner edge of the opening (31) of the branching-element body (30) of the branching element (3) is designed so as to at least impede, preferably prevent, an ingress of a melt of the heated material of the branching-element body (30) into the branching opening (22) of the wall (20) of the main line (2), and
wherein at least part of the inner edge (32) of the opening (31) of the branching-element body (30) of the branching element (3), preferably the entire inner edge, has at least one engagement element (34), which can extend at least partially into the branching opening (22) of the wall (20) of the main line (2),
**characterized in that**
at least part of the inner edge (32) of the opening (31) of the branching-element body (30) of the branching element (3), preferably the entire inner edge, has at least one aperture (35), which is designed so as to at least partially accommodate the melt.

2. Branching element (3) according to Claim 1, **characterized in that** the engagement element (34) of the branching-element body (30) is designed so as to at least partially form a form fit with the branching opening (22) of the wall (20) of the main line (2).

3. Branching element (3) according to Claim 1 or 2, **characterized**
**in that**
the engagement element (34) of the branching-element body (30) is designed so as to be closed all the way around in relation to the inner edge (32) of the opening (31) of the branching-element body (30).

4. Branching element (3) according to one of the preceding claims,
**characterized in that**
the aperture (35) of the branching-element body (30) is designed so as to be closed all the way around in relation to the inner edge (32) of the opening (31) of the branching-element body (30) of the branching element (3).

5. Branching element (3) according to one of the preceding claims,
**characterized in that**
the collar (33) of the branching-element body (30) is designed so as to be integrally connected, at least in part, to the wall (20) of the main line (2) by heating.

6. Pipe line (1)
having a main line (2) which has a wall (20),
wherein the wall (20) essentially surrounds a through-flow opening (21) for channelling a medium, and
wherein the wall (20) has at least one branching opening (22), which extends at least essentially perpendicularly in relation to the through-flow opening (21), and having a branching element (3) according to one of the preceding claims.

## Revendications

1. Élément de branchement (3) destiné à être utilisé dans une conduite (1) comprenant un conduit principal (2) qui présente une paroi (20),
la paroi (20) entourant essentiellement une ouverture d'écoulement (21) pour le guidage d'un fluide, et
la paroi (20) présentant au moins une ouverture de branchement (22) qui s'étend au moins sensiblement perpendiculairement à l'ouverture d'écoulement (21), l'élément de branchement (3) présentant un corps (30) d'élément de branchement qui est conçu pour être agencé sensiblement perpendiculairement sur la paroi (20) du conduit principal (2),
le corps (30) d'élément de branchement présente au moins une ouverture (31) qui est réalisée au moins partiellement congruente avec l'ouverture d'écoulement (21) du conduit principal (2), et le corps (30) d'élément de branchement présente au moins une collerette (33) qui est réalisée de manière à entourer au moins par endroits la paroi (20) du conduit principal (2) et à être reliée par liaison de matière à la paroi (20) du conduit principal (2), par chauffage,
un bord intérieur de l'ouverture (31) du corps (30) d'élément de branchement de l'élément de branchement (3) étant conçu pour au moins rendre difficile, de préférence pour empêcher, l'entrée d'une masse fondue du matériau chauffé du corps (30) d'élément de branchement dans l'ouverture de branchement (22) de la paroi (20) du conduit principal (2), et
le bord intérieur (32) de l'ouverture (31) du corps (30) d'élément de branchement de l'élément de branchement (3) présentant au moins partiellement, de préférence complètement, au moins un élément d'engagement (34) qui est apte à s'étendre au moins partiellement dans l'ouverture de branchement (22) de la paroi (20) du conduit principal (2),
**caractérisé en ce que**
le bord intérieur (32) de l'ouverture (31) du corps (30) d'élément de branchement de l'élément de branchement (3) présente au moins partiellement, de préférence entièrement, au moins un évidement (35) qui est conçu pour recevoir au moins partiellement la masse fondue.

2. Élément de branchement (3) selon la revendication 1, **caractérisé en ce que** l'élément d'engagement (34) du corps d'élément de branchement (30) est conçu pour former, au moins par endroits, une liaison par complémentarité de forme avec l'ouverture de branchement (22) de la paroi (20) du conduit principal (2).

3. Élément de branchement (3) selon la revendication 1 ou la revendication 2, **caractérisé en ce que**
l'élément d'engagement (34) du corps de l'élément de branchement (30) est formé de manière fermée autour du bord intérieur (32) de l'ouverture (31) du corps de l'élément de branchement (30).

4. Élément de branchement (3) selon l'une des revendications précédentes, **caractérisé en ce que**
l'évidement (35) du corps (30) d'élément de branchement est conçu de façon à être fermé et à s'étendre sur tout le pourtour du bord intérieur (32) de l'ouverture (31) du corps de l'élément de branchement (30) de l'élément de branchement (3).

5. Élément de branchement (3) selon l'une des revendications précédentes, **caractérisé en ce que**
la collerette (33) du corps de l'élément de branchement (30) est conçue de façon à être reliée par liaison de matière, au moins par endroits, à la paroi (20) du conduit principal (2), par chauffage.

6. Conduite (1) comprenant un conduit principal (2) qui présente une paroi (20),
la paroi (20) entourant essentiellement une ouverture d'écoulement (21) pour le guidage d'un fluide, et
la paroi (20) présentant au moins une ouverture de branchement (22) qui s'étend au moins sensiblement perpendiculairement à l'ouverture d'écoulement (21), et comprenant un élément de branchement (3) selon l'une des revendications précédentes.
